Europäisches Patentamt

(19) European Patent Office

Office européen des brevets

(11) Numéro de publication: **0 154 341**
**B1**

(12) **FASCICULE DE BREVET EUROPEEN**

(45) Date de publication du fascicule du brevet:
28.12.88

(51) Int. Cl.⁴: **G 06 F 15/332**

(21) Numéro de dépôt: 85102565.0

(22) Date de dépôt: 07.03.85

(54) **Processeur de calcul d'une transformée discrète du cosinus.**

(30) Priorité: 09.03.84 FR 8403665

(43) Date de publication de la demande:
11.09.85 Bulletin 85/37

(45) Mention de la délivrance du brevet:
28.12.88 Bulletin 88/52

(84) Etats contractants désignés:
BE DE FR GB IT LU NL SE

(56) Documents cités:
US-A- 4 385 363

IEEE TRANSACTIONS ON COMMUNICATIONS, vol.
COM-25, no. 9, septembre 1977, pages 1004-1009, New
York, US; WEN-HSIUNG CHEN et al.: "A fast
computational algorithm for the discrete cosine
transform"
IEEE TRANSACTIONS ON ELECTROMAGNETIC
COMPATIBILITY, vol. EMC-24, no. 2, mai 1982, pages
278-286, IEEE, New York, US; A. JALALI et al.: "A
high-speed FDCT processor for real-time processing of
NTSC color TV signal"
IEEE TRANSACTIONS ON COMPUTERS, vol. C-31, no. 9,
septembre 1982, pages 899-906, IEEE, New York, US;
F.A. KAMANGAR et al.: "Fast algorithms for the 2-D
discrete cosine transform"

(73) Titulaire: ALCATEL CIT, 33, rue Emeriau, F-75015 Paris
(FR)

(72) Inventeur: Arnould, Emmanuel, Boîte
Postale 6 Villarceaux, F-91620 La Ville Du Bois (FR)
Inventeur: Dugre, Jean-Pierre, Résidence San
Clemente 309 avenue Henri Giraud, F-06140 Vence (FR)

(74) Mandataire: Weinmiller, Jürgen et al,
Lennéstrasse 9 Postfach 24, D-8133 Feldafing (DE)

ACTORUM AG

## Description

La présente invention est relative aux processus de calcul d'une transformée discrète du cosinus, rentrant notamment dans des systèmes de compression en temps réel pour l'émission sur des liaisons à largeur de bande limitée de signaux numériques d'image de télévision.

L'utilisation de techniques de codage numérique et de compression est déjà connue pour le traitement de signaux d'image de télévision à transmettre, sans dégradation notable, sur des liaisons à largeur de bande limitée. Certaines de ces techniques, permettant un traitement d'un signal d'image de télévision en temps réel et l'obtention de résultats satisfaisants tant sur la qualité d'image transmise que sur le rapport de compression obtenu, font appel au calcul de la transformée discrète du cosinus en deux dimensions. Pour ce calcul, le signal d'image de télévision est divisé en blocs matriciels successifs de N × N éléments d'image numériques, non chevauchants. Ces blocs sont convertis en ensembles successifs de N × N coefficients de transformée discrète du cosinus à deux dimensions qui quantifiés et codés sont ensuite transmis en ligne. Par application de la propriété de séparabilité de la transformée discrète du cosinus en deux dimensions, le calcul de cette transformée se ramène à des calculs de transformée discrète du cosinus en une dimension.

La transformée discrète du cosinus d'une suite de N données $i(j)$, avec $j = 0, \ldots N-1$, est une suite de N données transformées $I(k)$, avec $k = 0 \ldots, N-1$, encore appelés coefficients, qui s'expriment par l'équation:

$$I(k) = \frac{2\,c(k)}{N} \sum_{j=0}^{N-1} i(j) \cos \frac{2j+1}{2N} k\pi$$

avec $k = 0, \ldots N-1$

et dans laquelle $c(k) = \frac{1}{\sqrt{2}}$ pour $k = 0$

$c(k) = 1$ pour $k = 1, \ldots N-1$

Le calcul de la transformée discrète du cosinus d'une suite de N données est effectué en réalisant une suite d'opérations réelles définies dans le temps sous forme d'un algorithme. L'un de ces algorithmes, applicable pour $N = 2^n$ avec n supérieur ou égal à 2 et du type connu sous la dénomination anglo-saxonne de «butterfly algorithm», est donné dans l'article intitulé «A Fast Computational Algorithm for the Discrete Cosine Transform» de Wen-Hsiung Chen, C. Harrison Smith et S.C. Fralick, publié dans IEEE Transactions on Communications, septembre 1977 pages 1004–1009. Il décompose le traitement des N données de la suite à transformer, pour l'obtention des N coefficients correspondants, à un facteur de normalisation près, en un nombre limité d'étapes successives fournissant chacune N résultats. Ces étapes consistent en des opérations d'addition ou soustraction entre paires convenables de données de la suite à transformer, ou paires convenables de résultats de l'étape qui précède directement celle considérée, et en des opérations de multiplication de résultats d'une étape, qui précède celle considérée, par une fonction cosinus ou sinus suivies d'opérations d'addition ou soustraction entre l'un des résultats de ces multiplications et l'un des résultats d'étape précédente ou entre deux des résultats de ces multiplications, considérés dans les deux cas par paires convenables.

Un processeur de calcul mettant en œuvre un algorithme déduit de l'algorithme précédent, dit de W.H. Chen et autres, est publié dans l'article «A High-Speed FDCT Processor for Real-Time Processing of NTSC Color TV Signal» de Ali Jalali et K.R. Rao dans IEEE Transactions on Electromagnetic Compatibility, Vol. EMC-24, N° 2, mai 1982 pages 278–286. Ce processeur, prévu pour le traitement de suites d'éléments d'image d'un signal d'image de télévision, est de structure modulaire à fonctionnement global en mode pipeline. Il comporte trois types de modules opératoires affectés à trois ensembles différents d'opérations à effectuer au cours de l'ensemble des étapes de traitement des éléments d'image d'une suite. L'un de ces modules, dit module simple, a deux entrées, il est affecté à une opération d'addition/soustraction. Un second module, dit module composite, a quatre entrées, il est affecté à des opérations de multiplication de deux des entrées par une fonction cosinus/sinus et d'addition/soustraction de ces produits et à des opérations d'addition/soustraction de chacune des deux autres entrées avec l'un de ces produits. Le troisième module, dit module de base, a deux entrées, il est affecté aux multiplications de chacune des entrées par une fonction cosinus/sinus et à l'addition/soustraction de ces produits. Ces différents modules sont sous la commande d'un module de mémoire programmée permettant le fonctionnement simultané des différents modules opératoires et l'exploitation des résultats que chacun d'eux élabore par le module suivant ou sur les sorties du dernier module.

La structure globale d'un tel processeur est complexe, elle met en œuvre de nombreuses unités arithmétiques d'addition/soustraction et de nombreuses unités arithmétiques de multiplication.

Un autre processeur de calcul, mettant en œuvre un algorithme déduit également de l'algorithme de W.H. Chen et autres publié dans IEEE Transactions on Communications et prévu également pour le traitement d'un signal d'image de télévision, est décrit dans le brevet américain n° 4 302 775. Cet algorithme modifié donné dans ce brevet décompose l'ensemble des calculs à effectuer à partir de N éléments d'image en étapes successives fournissant chacune N résultats. Ainsi, pour la transformation de 16 éléments d'image (N = 16), l'algorithme modifié donné dans ce brevet américain préconise une organisation de l'ensemble des calculs en 5 étapes successives, la première affectée à des opérations d'addition ou soustraction entre paires convenables d'éléments d'image d'entrée, la seconde affectée à des opérations identiques à celle de la première étape mais portant sur les paires convenables de résultats de ladite première étape, la troisième affectée à des opérations de multiplication des résultats précédents par des constantes (définissant des valeurs de cosinus ou de sinus et pouvant être ± 1) et d'addition ou soustraction par paires des produits obtenus, la quatrième affectée à des opérations d'addition ou soustraction entre paires de résultats de la troisième étape, et la cinquième affectée à des opérations de multiplication de chacun des résultats précédents par des constantes (définissant des valeurs d'une fonction cosinus ou sinus) et d'addition entre paires de produits élaborés.

Le processeur résultant comporte donc cinq ensembles de circuits opératoires montés à la suite les uns des autres et affectés aux opérations effectuées selon les cinq étapes successives de traitement définies ci-avant. Le processeur global est synchronisé sur le rythme d'arrivée des éléments d'image d'entrée, mais chaque ensemble de circuits opératoires à ses propres signaux de commande prélevés du rythme des éléments d'image d'entrée. Ce processeur reste de structure complexe pour son fonctionnement en mode pipeline.

La présente invention a pour but de définir une architecture plus simple de processeur pour le calcul de la transformée discrète du cosinus d'une suite de N données numériques, en mettant en œuvre un algorithme modifié établi à partir de celui de W.H. Chen et autres, qui conduit à une structure finale de faible taille et aisément intégrable.

Elle a donc pour objet un processeur de calcul de transformée discrète du cosinus comportant, pour le calcul de la transformée d'une suite de N données numériques, $N = 2^n$, n entier supérieur à 2, des unités arithmétiques d'addition/soustraction et de multiplication, caractérisé par le fait qu'il est organisé en quatre étages successifs de calcul affectés individuellement à une seule et même opération et constituant ensemble un module processeur commandé par une mémoire programmée et en ce que lesdits étages comportent:

— pour le premier étage, dit d'entrée du module, une première unité arithmétique d'addition/soustraction à deux bus d'entrée recevant par paires successives les données à traiter et à bus de sortie délivrant leurs résultats,

— pour le deuxième étage, une deuxième unité arithmétique d'addition/soustraction à deux bus d'entrée et un bus de sortie, un premier et un deuxième registre de mémoire adressable chacun associé à l'un des bus d'entrée de ladite deuxième unité arithmétique d'addition/soustraction et des circuits multiplexeurs assurant sélectivement le chargement desdits premier et deuxième registres à partir du bus de sortie du premier étage ou d'un bus interne au module et dit de bouclage et l'alimentation de chaque bus d'entrée de ladite deuxième unité arithmétique d'addition/soustraction à partir du bus de sortie du premier étage ou du registre associé,

— pour le troisième étage, une unité arithmétique de multiplication à un bus de sortie et à deux bus d'entrée reliés respectivement à une mémoire adressable de valeurs de fonctions sinus et cosinus associée et au bus de sortie dudit deuxième étage,

— et pour le quatrième étage, dit de sortie du module, une troisième unité arithmétique d'addition/soustraction à deux bus d'entrée et un bus de sortie auquel est connecté ledit bus de bouclage pour le chargement sélectif desdits premier et deuxième registres, un troisième et un quatrième registre de mémoire adressable chacun associé à l'un des bus d'entrée de ladite troisième unité arithmétique d'addition/soustraction et chargé sélectivement à partir du bus de sortie du troisième étage, et des circuits multiplexeurs assurant sélectivement l'alimentation de chaque bus d'entrée de ladite troisième unité arithmétique d'addition/soustraction à partir du bus de sortie du troisième étage ou du registre associé.

Selon un mode de réalisation particulier, ce processeur appliqué au calcul de la transformée en deux dimensions de blocs successifs de N × N éléments d'image numériques d'un signal d'image, comporte, en outre, un jeu de trois mémoires, dites première, deuxième et troisième mémoires, commandées individuellement en écriture et en lecture par ladite mémoire programmée et associées audit module, et, pour chaque mémoire, un multiplexeur de mots entrant et sortant de la mémoire et un multiplexeur d'adressage de la mémoire, commandés par ladite mémoire programmée pour relier séquentiellement ladite première mémoire, à double accès, mise en lecture puis la seconde mémoire, également à double accès, alors mise en lecture aux deux bus d'entrée du premier étage dudit module tandis que ladite seconde mémoire mise en écriture puis la troisième mise en écriture sont reliées successivement, pour ces mêmes séquences, au bus de sortie de l'étage de sortie du module pour le transfert des mots résultant du module.

Les caractéristiques et avantages de la présente invention ressortiront de la description donnée ci-après d'un mode préféré de réalisation, en regard des dessins ci-annexés. Dans ces dessins:

— la figure 1 est le diagramme d'un algorithme modifié selon l'invention pour le calcul de la transformée discrète du cosinus d'une suite de N données,

— la figure 2 représente le schéma d'un processeur de calcul de transformée discrète du cosinus en une dimension, selon l'invention,

— la figure 3 est le schéma d'un processeur de calcul de transformée discrète du cosinus en deux dimensions, selon l'invention.

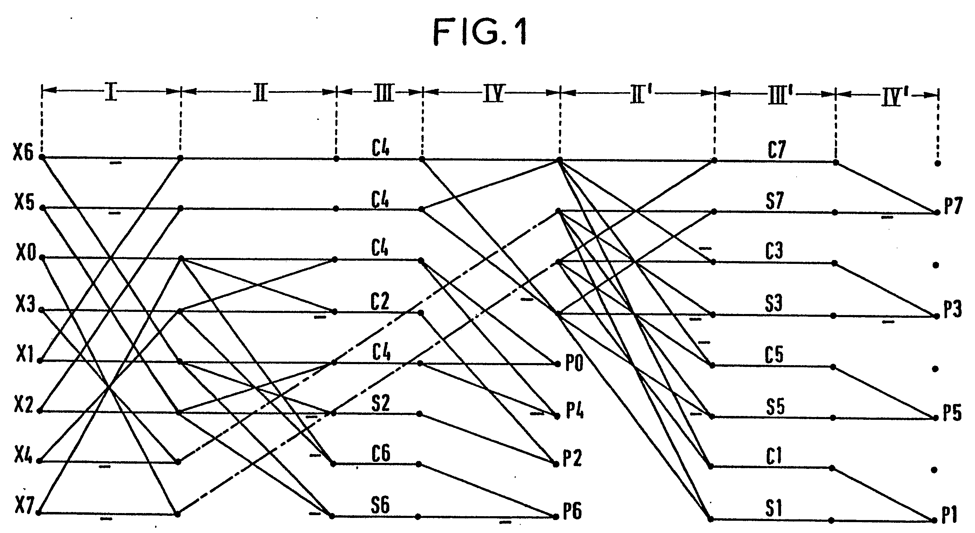

Dans la figure 1, illustrant le diagramme d'un algorithme modifié de calcul de la transformée discrète du cosinus d'une suite de N données, par exemple, N éléments d'image, avec N = 8, on voit que les calculs à effectuer sont groupés en étapes successives au niveau de chacune desquelles est effectuée de manière répétitive une même opération en N temps d'horloge successifs. Ces opérations consistent:

– au niveau de la première étape I, à effectuer des opérations d'addition ou soustraction entre paires convenables de données d'entrées notées X0 à X7,

– au niveau de la seconde étape II, à effectuer des opérations d'addition ou soustraction portant sur les résultats obtenus en sortie de l'étape I pris, en ce qui concerne une partie d'entre eux, par paires convenables et, en ce qui concerne une autre partie d'entre eux, individuellement pour leur simple report,

– au niveau de la troisième étape III, à effectuer des opérations de multiplication des résultats de l'étape II par des fonctions cosinus ou sinus de valeurs définies notées par Ci ou Si, avec $Ci = \cos \dfrac{i\,\pi}{16}$ et $Si = \sin \dfrac{i\,\pi}{16}$, pour $i = 1, 2, \ldots 7$,

– au niveau de la quatrième étape IV, à effectuer des opérations d'addition ou soustraction entre les résultats de l'étape III précédente pris par paires convenables,

– au niveau de la cinquième étape, notée II', à effectuer des opérations d'addition ou soustraction portant sur une partie des résultats issus de l'étape IV et une partie des résultats issus de l'étape II et indiqués par des traits mixtes en entrée pour cette étape, ces résultats traités étant considérés par paires convenables,

– au niveau de la sixième étape, notée III', à effectuer des opérations de multiplication des résultats délivrés par l'étape précédente II' par des fonctions cosinus ou sinus de valeurs définies Si et Ci,

– au niveau de la septième étape notée IV', à effectuer des opérations d'addition ou soustraction entre paires convenables de résultats délivrés par l'étape III'.

Les N coefficients de la transformée discrète du cosinus, à un facteur de normalisation près, notés P0 à P7, sont obtenus au cours de l'étape IV et de l'étape IV', pour quatre des huit temps d'horloge de traitement.

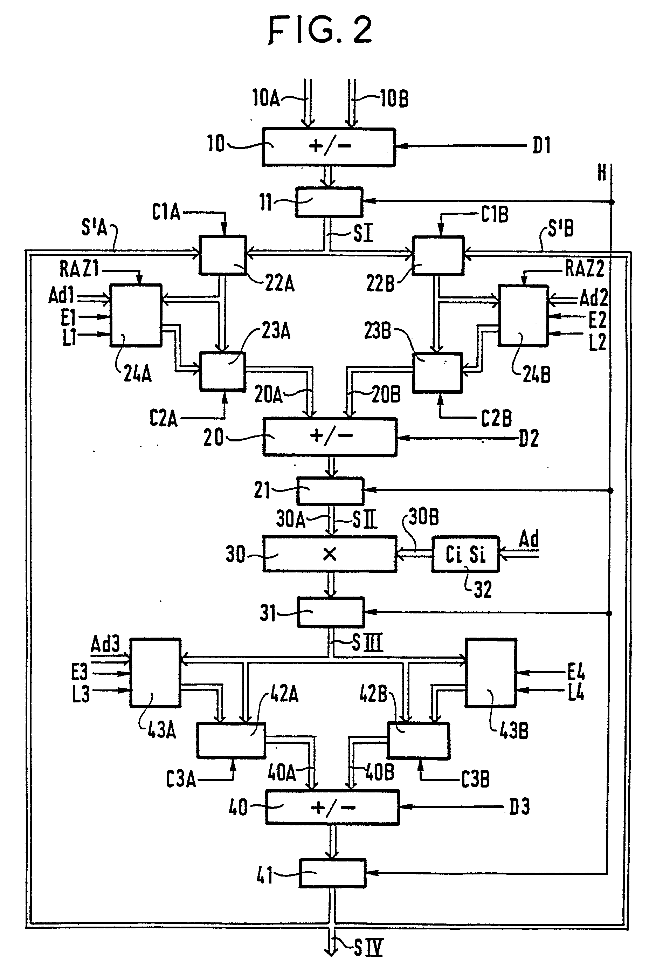

Le processeur de la figure 2 effectue les calculs successifs illustrés dans le diagramme de la figure 1, en tirant profit de l'analogie entre le groupe formé par les étapes de calcul II, III et IV et celui formé par les étapes de calcul II', III' et IV' et des traitements effectués de manière différée entre ces deux groupes d'étapes, pour définir une structure de module processeur très simple.

Ainsi, le processeur illustré dans la figure 2 comprend quatre étages successifs de calcul, comportant essentiellement pour le premier étage, dit d'entrée, une première unité arithmétique, d'addition/soustraction 10, pour le second, une deuxième unité arithmétique, d'addition/soustraction 20, pour le troisième, une unité arithmétique de multiplication 30 et, pour le quatrième, dit étage de sortie, une troisième unité arithmétique d'addition/soustraction 40. Un registre de sortie commandé sur l'un des fronts d'un signal d'horloge H, soit les registres 11, 21, 31 et 41 pour les quatre étages respectivement, assure

la délivrance des résultats élaborés par l'étage.

Ces unités d'addition/soustraction et de multiplication ont chacune deux bus d'entrée référencés par le chiffre de référence affecté à l'unité considérée accompagné de la lettre A et B, et un bus de sortie considéré sur le registre de sortie associé, ce bus de sortie étant désigné par la lettre S accompagné du chiffre romain I, II, III, IV correspondant aux identifications des étapes successives données sans ou avec le signe «prime» dans le diagramme de la figure 1. Les unités d'addition/soustraction 10, 20 et 40 reçoivent en outre chacune un signal de commande addition/soustraction désigné par D1, D2 ou D3 selon l'unité 10, 20 ou 40 considérée.

Dans ce module processeur, à deux bus d'entrée de données constitués par les bus 10A et 10B et un bus de sortie constitué par le bus SIV, l'unité arithmétique 20 du deuxième étage a l'un de ses bus d'entrée 20A relié à travers deux premiers circuits multiplexeurs en cascade 22A, 23A soit sur le bus de sortie du premier étage SI soit sur un bus de sortie d'un registre de mémoire associé 24A. Ce registre de mémoire 24A est lui-même chargé à travers le circuit multiplexeur 22A, soit à partir dudit premier étage par le bus SI, soit à partir du quatrième étage par un bus S'A interne au module et dit de bouclage raccordé au bus SIV. Ces circuits multiplexeurs 22A, 23A reçoivent chacun un signal de commande C1A ou C2A pour la liaison sélective à réaliser entre les différents bus précités. Le deuxième bus d'entrée 20B de l'unité arithmétique 20 est, de manière analogue, relié à deux deuxièmes circuits multiplexeurs en cascade 22B et 23B auxquels est associé un deuxième registre de mémoire 24B et un autre bus interne S'B de bouclage raccordé au bus de sortie SIV du quatrième étage. Ces deuxièmes circuits multiplexeurs ont leurs propres signaux de commande C1B, C2B qui assurent une liaison sélective entre le bus SI, S'B, 20B et le bus d'entrée et sortie de son registre de mémoire associé 24B.

Les registres de mémoire 24A et 24B sont susceptibles de mémoriser chacun plusieurs mots de données ou résultats issus de SI ou de SIV. Dans l'exemple donné, ils sont constitués de trois étages. Ils reçoivent chacun un signal de commande en écriture E1 ou E2, un signal de commande en lecture L1 ou L2, un signal de mise à zéro RAZ1 ou RAZ2 et un signal de commande d'adressage Ad1 ou Ad2, pour le chargement, la lecture ou la remise à zéro de l'un de leurs étages alors adressé.

Le multiplicateur 30 a l'un de ses bus d'entrée 30A directement relié au bus de sortie SII du second étage. Son deuxième bus d'entrée 30B est relié à une mémoire de fonctions cosinus et sinus 32 qui lui est associée, mémorisant des valeurs définies Ci et Si de ces fonctions, $Ci = \cos \dfrac{i\,\pi}{16}$ et $Si = \sin \dfrac{i\,\pi}{16}$, $(N = 8)$, et commandée par un signal d'adressage Ad.

L'unité arithmétique 40 du quatrième étage a l'un de ses bus d'entrée 40A relié à travers un troisième circuit multiplexeur 42A soit sur le bus de sortie SIII du troisième étage soit sur un bus de sortie d'un registre de mémoire associé 43A. Ce registre 43A est lui-même chargé à partir du bus SIII relié à son bus d'entrée. Un signal de commande C3A appliqué au circuit multiplexeur 42A assure l'aiguillage sélectif entre le bus SIII, le bus de sortie du registre 43A et le bus 40A. Le registre 43A est choisi de capacité permettant de mémoriser plusieurs mots ou résultats successivement délivrés sur SIII, dans l'exemple considéré il est à deux étages. Il reçoit un signal de commande d'écriture E3, un signal de commande de lecture L3 et un signal d'adressage Ad3 pour le chargement ou la lecture convenable de chacun de ses étages.

Le deuxième bus d'entrée 40B de cette unité 40 est relié, de manière analogue, à travers un quatrième circuit multiplexeur 42B soit au bus SIII soit au bus de sortie d'un autre registre de mémoire associé 43B. Ce registre 43B est chargé, à partir du bus SIII, sous la commande d'un signal d'écriture E4 qui lui est appliqué; il reçoit également un signal de commande de lecture L4 tandis que le circuit multiplexeur 42B reçoit un signal de commande C3B, assurant la liaison sélective du bus SIII et du bus de sortie de ce registre 43B avec le bus 40B. Ce registre 43B est, dans l'exemple de réalisation donné, choisi de capacité égale à un seul mot issu du bus SIII.

Les signaux extérieurs de commande d'adressage, d'écriture et de lecture des registres de mémoire 22A, 22B, 42A et 42B, de remise à zéro RAZ1 et RAZ2 des registres de mémoire 24A et 24B, celui d'adressage de la mémoire des cosinus et sinus 32, les signaux de commande D1, D2 et D3 des unités arithmétiques 10, 20 et 40 et les signaux de commande C1A, C2A, C1B, C2B, C3A et C3B des circuits multiplexeurs sont délivrés par une mémoire programmée de commande, non représentée. Les données d'entrée ou éléments d'image numériques à traiter ainsi que le signal d'horloge H définissant les cycles opératoires successifs de chacun des étages de traitement, pour la sortie des résultats intermédiaires ou des coefficients, sont délivrés par un circuit contrôleur principal, non représenté, pilotant également la mémoire programmée de commande.

Dans ce module processeur, les éléments d'image d'entrée sont définis sous 8 bits, les résultats intermédiaires et les coefficients sont définis sous 12 bits. Le module a donc une structure à bus internes de 12 bits d'un étage à l'autre et à deux bus d'entrée de données de 8 bits et un bus de sortie de 12 bits.

Le fonctionnement du processeur et le déroulement des traitements sont donnés dans les tableaux I et II ci-après en regard de cycles opératoires successifs 1, 2, 3 . . . donnés par le signal H. Dans ces tableaux on a indiqué pour une suite de huit éléments d'image Xi à traiter, i = 0, 1, . . ., 7, considérés par paires convenables sur les bus d'entrée 10A et 10B, les résultats successifs, notés par Li, Mi, Ni, Pi notamment, obtenus sur les sorties des différents étages de calcul et/ou mémorisés dans les étages respectifs R1, R2 ou R3 des registres de mémoire. On y a également ébauché les traitements effectués sur une nouvelle suite d'éléments d'image succédant à la précédente en entrée du module processeur, les éléments d'image et résultats relatifs à cette nouvelle suite qui apparaissent dans ces tableaux ayant été

Tableau I

| H | 10A | 10B | SI | 24A | | | 24B | | | 20A | 20B | SII |
|---|-----|-----|-----|------|-----|-----|------|-----|-----|------|------|------|
|   |     |     |     | R1 | R2 | R3 | R1 | R2 | R3 |      |      |      |
| 1 | X1 | X6 | · | · | · | · | · | · | · | · | · | · |
| 2 | X2 | X5 | L6 | 0 | · | · | · | · | · | · | · | · |
| 3 | X0 | X7 | L5 | 0 | · | L6 | 0 | · | · | L6 | 0 | · |
| 4 | X3 | X4 | L0 | 0 | · | L6 | 0 | · | L5 | 0 | L5 | L6 |
| 5 | X1 | X6 | L3 | L0 | · | L6 | 0 | · | L5 | L0 | L3 | L5 |
| 6 | X2 | X5 | L1 | L0 | · | L6 | L3 | · | L5 | L0 | L3 | M0 |
| 7 | X3 | X4 | L2 | L0 | · | L1 | L3 | · | L5 | L1 | L2 | M3 |
| 8 | X0 | X7 | M4 | L0 | · | L1 | L3 | L2 | L5 | L1 | L2 | M1 |
| 9 | · | · | M7 | L0 | M4 | L1 | L3 | L2 | M6 | L0 | L3 | M2 |
| 10 | · | · | · | M7 | M4 | L1 | M5 | L2 | M6 | L1 | L2 | M3 |
| 11 | · | · | · | M7 | M4 | L1 | M5 | L2 | M6 | M7 | M6 | M2 |
| 12 | · | · | · | M7 | M4 | L1 | M5 | L2 | M6 | M4 | M5 | N7 |
| 13 | · | · | · | M7 | M4 | L1 | M5 | L2 | M6 | M7 | M6 | N4 |
| 14 | · | · | · | M7 | M4 | L1 | M5 | L2 | M6 | M4 | M5 | N6 |
| 15 | · | · | · | M7 | M4 | L1 | M5 | L2 | M6 | M7 | M6 | N5 |
| 16 | · | · | · | M7 | M4 | L1 | M5 | L2 | M6 | M4 | M5 | N6 |
| 17 | X'1 | X'6 | · | M7 | M4 | L1 | M5 | L6 | M6 | M7 | M6 | N5 |
| 18 | X'2 | X'5 | L'6 | 0 | M4 | L1 | M5 | L2 | M6 | M4 | M5 | N7 |
| 19 | X'0 | X'7 | L'5 | 0 | M4 | L'6 | 0 | L2 | M6 | L'6 | 0 | N4 |
| 20 | X'3 | X'4 | L'0 | 0 | M4 | L'6 | 0 | L'5 | 0 | L'5 | L6 |
| 21 | X'1 | X'6 | L'3 | L'0 | M4 | L'6 | 0 | L2 | L'5 | L'0 | L'3 | L'5 |
| 22 | X'2 | X'5 | L'1 | L'0 | M4 | L'6 | L'3 | L2 | L'5 | L'0 | L'3 | M'0 |
| 23 | X'3 | X'4 | L'2 | L'0 | M4 | L'1 | L'3 | L2 | L'5 | L'1 | L'2 | M'3 |
| 24 | X'0 | X'7 | M'4 | L'0 | M4 | L'1 | L'3 | L'2 | L'5 | L'1 | L'2 | M'1 |
| 25 | · | · | M'7 | L'0 | M'4 | L'1 | L'3 | L'2 | M'6 | L'0 | L'3 | M'2 |

Tableau II

| H | SIII | 43A R1 | R2 | 43B | 40A | 40B | SIV |
|---|---|---|---|---|---|---|---|
| 1 | . | . | . | . | . | . | . |
| 2 | . | . | . | . | . | . | . |
| 3 | . | . | . | . | . | . | . |
| 4 | . | . | . | . | . | . | . |
| 5 | C4 L6 | . | . | . | . | . | . |
| 6 | C4 L5 | C4 L6 | . | . | . | . | . |
| 7 | C4 M0 | C4 L6 | . | C4 L5 | C4 L6 | C4 L5 | . |
| 8 | C2 M3 | C4 L6 | C4 M0 | C4 L5 | C4 L6 | C4 L5 | M6 |
| 9 | C4 M1 | C2 M3 | C4 M0 | C4 L5 | C4 M0 | C4 M1 | M5 |
| 10 | S2 M2 | C2 M3 | C4 M0 | C4 M1 | C4 M0 | C4 M1 | P0 |
| 11 | C6 M3 | C2 M3 | C4 M0 | S2 M2 | C2 M3 | S2 M2 | P4 |
| 12 | S6 M2 | C6 M3 | C4 M0 | S2 M2 | C6 M3 | S6 M2 | P2 |
| 13 | C7 N7 | C6 M3 | C4 M0 | S2 M2 | . | . | P6 |
| 14 | S7 N4 | C7 N7 | C4 M0 | S2 M2 | C7 N7 | S7 N4 | . |
| 15 | C3 N6 | C7 N7 | C4 M0 | S2 M2 | . | . | P7 |
| 16 | S3 N5 | C3 N6 | C4 M0 | S2 M2 | C3 N6 | S3 N5 | . |
| 17 | C5 N6 | C3 N6 | C4 M0 | S2 M2 | . | . | P3 |
| 18 | S5 N5 | C5 N6 | C4 M0 | S2 M2 | C5 N6 | S5 N5 | . |
| 19 | C1 N7 | C5 N6 | C4 M0 | S2 M2 | . | . | P5 |
| 20 | S1 N4 | C1 N7 | C4 M0 | S2 M2 | C1 N7 | S1 N4 | . |
| 21 | C4 L'6 | C1 N7 | C4 M0 | S2 M2 | . | . | P1 |
| 22 | C4 L'5 | C4 L'6 | C4 M0 | S2 M2 | . | . | . |
| 23 | C4 M'0 | C4 L'6 | C4 M0 | C4 L'5 | C4 L'6 | C4 L'5 | . |
| 24 | C2 M'3 | C4 L'6 | C4 M'0 | C4 L'5 | C4 L'6 | C4 L'5 | M'6 |
| 25 | C4 M'1 | C2 M'3 | C4 M'0 | C4 L'5 | C4 M'0 | C4 M'1 | M'5 |

repérés par les mêmes références que leurs homologues de la suite précédente accompagnées du signe prime.

Dans ces tableaux, le symbole «.» traduit un état indifférent, et les résultats intermédiaires notés Li, Mi et Ni ainsi que les coefficients notés Pi obtenus à partir des éléments d'image Xi peuvent être définis de la manière suivante:

$$L0 = X0 + X7 \qquad M0 = L0 + L3$$
$$L1 = X1 + X6 \qquad M1 = L1 + L2$$
$$L2 = X2 + X5 \qquad M2 = L1 - L2$$
$$L3 = X3 + X4 \qquad M3 = L0 - L3$$
$$L4 = X3 - X4 \qquad M4 = L4$$
$$L5 = X2 - X5 \qquad M5 = C4\,L6 - C4\,L5$$
$$L6 = X1 - X6 \qquad M6 = C4\,L6 + C4\,L5$$
$$L7 = X0 - X7 \qquad M7 = L7$$

$$N0 = C4\,M0 + C4\,M1 \qquad P0 = N0$$
$$N1 = C4\,M0 - C4\,M1 \qquad P4 = N1$$
$$N2 = S2\,M2 + C2\,M3 \qquad P2 = N2$$
$$N3 = C6\,M3 - S6\,M2 \qquad P6 = N3$$
$$N4 = M4 + M5 \qquad P1 = C1\,N7 + S1\,N4$$
$$N5 = M4 - M5 \qquad P5 = C5\,N6 + S5\,N5$$
$$N6 = M7 - M6 \qquad P3 = C3\,N6 - S3\,N5$$
$$N7 = M7 + M6 \qquad P7 = C7\,N7 - S7\,N4$$

avec $Ci = Cos\dfrac{i\,\pi}{16}$ et $Si = Sin\dfrac{i\,\pi}{16}$ pour $i = 1, 2 \ldots 7$.

En regard de ces deux tableaux, il ressort que ce module processeur, comportant 3 additionneurs/soustracteurs, un seul multiplicateur, 9 étages de registres de mémoire chacun de capacité d'un mot de 12 bits, 6 multiplexeurs de bus et une mémoire des valeurs de cosinus et sinus, effectue les différents calculs de manière séquentielle sur les 8 éléments d'image de suites successives de 8 éléments d'image, ces suites pouvant être par exemple des lignes successives d'un bloc matriciel de 8 × 8 éléments d'image. Cette structure permet un calcul de transformée discrète en une dimension portant sur les 8 éléments d'image Xi de chaque ligne de bloc matriciel qui lui sont appliqués en 8 cycles H notés 1 à 8 et délivre les coefficients correspondants Pi en 16 cycles H, notés 6 à 21 pour la première ligne, soit en 128 cycles H successifs pour les traitements des 8 lignes, après une initialisation globale du traitement effectué sur 5 cycles notés 1 à 5.

On notera que les coefficients Pi ainsi obtenus ne sont pas normalisés. Pour disposer des coefficients normalisés, qui sont égaux aux produits des coefficients Pi par le facteur de normalisation $\dfrac{2}{N}$, il suffit, le nombre N étant de la forme $2^n$ avec n entier, d'opérer simlement un décalage des bits définissant les coefficients Pi de $(n-1)$ positions, c'est-à-dire ici de 2 positions, vers les bits de plus faibles poids. Ce décalage est obtenu simplement en pratique en diminuant le poids des bits délivrés en sortie du module dans un rapport $2^{n-1}$, c'est-à-dire ici dans un rapport 4.

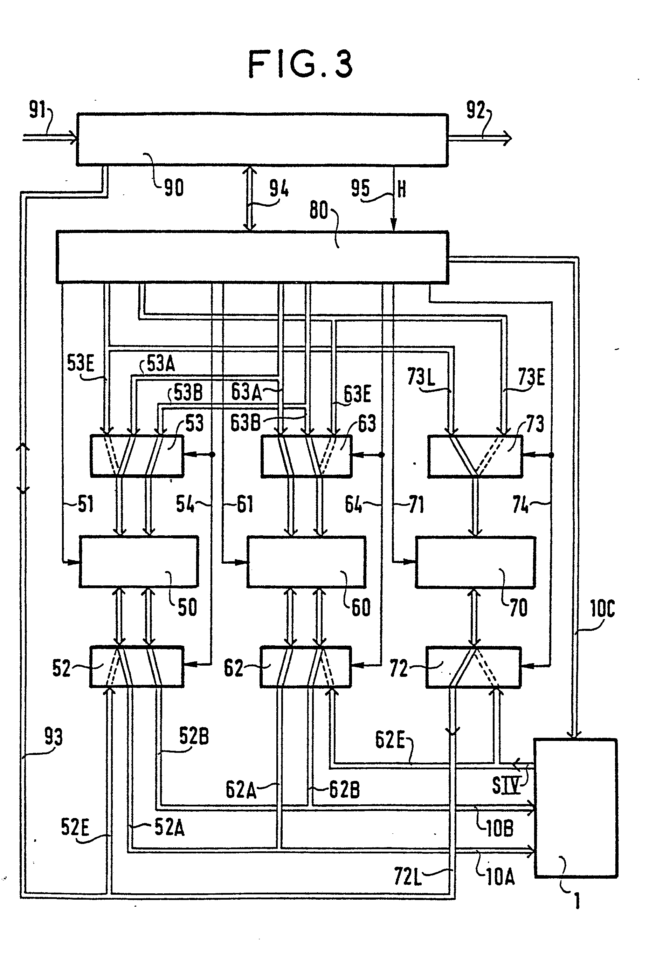

Dans la figure 3, on a schématisé le processeur de calcul de la transformée discrète du cosinus en deux dimensions d'un bloc matriciel de N × N éléments d'image numérique, N=8.

Ce processeur est construit essentiellement sur le module processeur de calcul de transformée discrète du cosinus en une dimension. Il comporte, outre ce module désigné sous la référence 1 et identique à celui décrit en regard de la figure 2 à ceci près que ses deux bus d'entrée auront ici 12 bits:

- trois mémoires ou registres mémoire 50, 60, 70, reliées au module 1,
- une mémoire programmée 80 de commande des registres mémoire 50, 60, 70 et du module 1,
- et un circuit contrôleur principal 90 pilotant la mémoire programmée 80 et assurant le stockage des éléments d'image pour leur transfert par blocs successifs de 64 vers le module processeur et le stockage des blocs des 64 coefficients P issus du traitement.

Le module processeur 1 n'est plus décrit. On a simplement repéré ses deux bus d'entrée de données et son bus de sortie par les références 10A, 10B et SIV utilisées dans la figure 2. Il est commandé par la mémoire programmée 80 ainsi qu'indiqué ci-avant, un bus de commande 10C regroupe ces commandes et le signal H provenant du circuit contrôleur 90.

Chacun des registres de mémoire 50, 60 et 70 est de capacité choisie pour mémoriser un bloc de 8 × 8 mots, soit 64 éléments d'image sur 8 bits chacun pour le registre 50 ou 64 coefficients sur 12 bits chacun pour les registres 60 et 70. Ils sont individuellement commandés en écriture et lecture par la mémoire programmée de commande 80 et reçoivent un signal de commande écriture/lecture traduit par les niveaux logiques 0/1 sur une liaison 51, 61 ou 71. A chacun de ces registres de mémoire 50, 60, 70 sont associés un premier multiplexeur, de mots entrants ou sortants, 52, 62 ou 72 et un second multiplexeur, d'adresses pour ces mots, 53, 63 ou 73, tous deux commandés simultanément par un signal de commande délivré par la mémoire programmée de commande 80 par une liaison individuelle 54, 64 ou 74. Les registres de mémoire 50 et 60 sont des registres double accès, à bus d'entrée et sortie de mots bidirectionnels et le registre 70, un registre simple accès, à bus d'entrée et de sortie de mots également bidirectionnel.

Les multiplexeurs de mots 52 et 62 sont analogues; ils présentent chacun ainsi que schématisé un bus d'entrée pour les mots entrant dans le registre mémoire et deux bus de sortie pour les mots sortant du registre mémoire, ces bus étant repérés par la référence du multiplexeur accompagnée de la lettre E, pour le bus des mots entrant dans le registre mémoire, des lettres A et B, pour les bus des mots sortant du registre simultanément. Leur signal de commande assure une liaison sélective entre leur bus affecté de la lettre E et l'un des bus bidirectionnels d'entrée/sortie de registre de mémoire ou entre leurs deux bus affectés des lettres A et B et les deux bus d'entrée/sortie bidirectionnels de registre. Pour le multiplexeur 52, le bus d'entrée 52E est relié au circuit contrôleur principal 90, les bus de sortie 52A et 52B sont reliés aux bus 10A et 10B du module processeur 1. Pour le multiplexeur 62, le bus d'entrée 62E est relié au bus de sortie SIV du module processeur 1, ses bus de sortie 62A et 62B sont également reliés aux bus d'entrée 10A et 10B du module processeur 1.

Les multiplexeurs d'adresses 53 et 63 sont aussi analogues entre eux. Ils présentent chacun trois bus d'entrée d'adresses reliés à la mémoire programmée 80 et désignés par les références du multiplexeur accompagnées de la lettre E pour l'un des bus affecté aux adresses d'écriture des mots entrant dans leur registre de mémoire et par les lettres A et B, pour les deux autres bus affectés aux adresses de lecture des paires de mots sortant de leur registre de mémoire. Ils présentent chacun deux bus de sortie reliés aux deux bus d'adresses de leur registre mémoire à double accès. Ils sont commandés individuellement par le signal sur la liaison 54 ou 64 pour assurer sélectivement la liaison entre le seul bus affecté de la lettre E et l'un des bus de sortie ou la liaison entre leurs deux autres bus d'entrée affectés des lettres A et B et les deux bus de sortie, pour délivrer soit les adresses d'écriture des mots entrants soit les adresses de lecture des paires de mots sortants.

Le multiplexeur de mots 72 assure la liaison sélective entre le bus de sortie SIV du module processeur 1 et le bus bidirectionnel d'entrée/sortie du registre mémoire 70 ou entre ce bus bidirectionnel d'entrée/sortie du registre mémoire 70 et un bus de sortie 72 L relié au circuit contrôleur 90. Le multiplexeur d'adresses 73 assure la liaison sélective entre un bus 73E affecté aux adresses d'écriture des mots entrant dans le registre 70 et le bus d'adresse de ce registre simple accès ou entre ce bus d'adresse du registre 70 et un bus 73 L affecté aux adresses de lecture des mots sortant de ce registre.

Le circuit contrôleur 90 assure le transfert d'éléments d'image X, par blocs de 64, vers le registre de mémoire 50, reçoit du registre de mémoire 70 les coefficients, P, résultant de la transformation en deux dimensions et contrôle le processus général de traitement. Il présente un bus d'entrée 91 des éléments du signal d'image échantillonné, un bus de sortie 92 des coefficients P du signal traité, un bus bidirectionnel 93 de transfert des blocs successifs d'éléments d'image du circuit contrôleur 90 vers le registre de mémoire 50 et des blocs de coefficients P du registre de mémoire 70 vers le circuit contrôleur 90, ce bus 93 étant relié au bus 52E et au bus 72L précités. Il présente en outre un bus 94 de contrôle général du processeur sur lequel sont appliqués un signal de demande d'accès du circuit contrôleur aux registres de mémoire 50 et 70 transmis à la mémoire programmée 80, associé à un signal écriture/lecture dans le circuit contrôleur 90 donnant le sens du transfert concerné, un signal de réponse transmis au circuit contrôleur par la mémoire programmée, correspondant à la fonction «prêt à» du processeur général. Il fournit, en outre, le signal d'horloge H, transmis sur une liaison 95, qui définit le rythme des traitements ainsi que, par des liaisons non représentées, les alimentations nécessaires au fonctionnement du processeur.

Le calcul de la transformée discrète en deux dimensions de chaque bloc de 8 × 8 éléments d'image est effectué en plusieurs séquences:

– une première séquence qui est une séquence d'initialisation, elle correspond au transfert de 8 × 8 éléments d'image du circuit contrôleur 90 au registre de mémoire 50, le chargement de ce registre 50 étant effectué aux adresses successives délivrées sur le bus 53E,

– une deuxième séquence qui est une séquence de traitement, pour le calcul des 64 coefficients correspondant à la transformation en une dimension des 8 lignes de 8 éléments d'image, elle est effectuée par étapes successives par le module 1 recevant les éléments d'image du registre de mémoire 50 lu aux adresses successives délivrées sur les bus 53A et 53B et délivrant les coefficients résultants dans le registre de mémoire 60 chargé aux adresses successives délivrées sur le bus 63E,

– une troisième séquence qui est également une séquence de traitement, pour le calcul des 64 coefficients définitifs correspondant à la transformation en une dimension des 64 coefficients résultant de la deuxième séquence convenablement arrangés en 8 groupes de 8, elle est effectuée par étapes successives par le module 1 recevant du registre de mémoire 60 convenablement adressé à partir des bus 63A et 63B les paires de coefficients issus du premier traitement et délivrant au registre de mémoire 70 adressé à partir du bus 73E les coefficients définitifs,

– et une quatrième séquence, qui est une séquence finale pour le traitement de ces 64 éléments d'image, elle correspond au transfert du bloc des 64 coefficients définitifs du registre de mémoire 70, lu et adressé à partir du bus 73L, au circuit contrôleur 90.

Pendant les troisième et quatrième séquences, relatives aux traitements du bloc de 64 éléments d'image considéré, s'effectuent aussi les première et deuxième séquences relatives aux traitements du bloc suivant de 64 éléments d'image.

Bien entendu, pour disposer des coefficients définitifs normalisés, on effectuera le décalage de 2 positions binaires mentionnées ci-avant à la fin de la description relative au module processeur 1 des bits définissant les résultats délivrés par ce module au cours de chacune des deuxième et troisième séquences du calcul de la transformée discrète en 2 dimensions de chaque bloc de 8 × 8 éléments d'image.

La présente invention a été décrite en regard d'un calcul effectué sur des suites de 8 données numériques. La même architecture peut être utilisée pour effectuer des calculs correspondants portant sur des suites de 16 données numériques ou plus, en adoptant au niveau du module processeur 1 (figure 2) des registres mémoire de capacité convenable et en effectuant le nombre convenable de bouclage entre sa sortie SIV et le second additionneur 20 qu'il comporte.

## Revendications

1. Processeur de calcul de transformée discrète du cosinus comportant, pour le calcul de la transformée d'une suite de N données numériques, $N = 2^n$, n entier supérieur à 2, des unités arithmétiques d'addition/soustraction et de multiplication, caractérisé par le fait qu'il est organisé en quatre étages successifs de calcul affectés individuellement à une seule et même opération et constituant ensemble un module processeur (1) commandé par une mémoire programmée (80) et en ce que lesdits étages comportent:

– pour le premier étage, dit d'entrée du module, une première unité arithmétique d'addition/soustraction (10) à deux bus d'entrée recevant par paires successives les données à traiter et à un bus de sortie (SI) délivrant leurs résultats,

– pour le deuxième étage, une deuxième unité arithmétique d'addition/soustraction (20) à deux bus d'entrée et un bus de sortie (SII), un premier et un deuxième registre de mémoire adressable (24A, 24B) chacun associé à l'un des bus d'entrée de ladite deuxième unité arithmétique d'addition/soustraction, et des circuits multiplexeurs (22A, 23A, 22B, 23B) assurant sélectivement le chargement desdits premier et deuxième registres à partir du bus de sortie (SI) du premier étage ou d'un bus interne au module et dit de bouclage (S'A, S'B) et l'alimentation de chaque bus d'entrée de ladite deuxième unité arithmétique d'addition/soustraction à partir du bus de sortie du premier étage ou du registre associé,

– pour le troisième étage, une unité arithmétique de multiplication (30) à un bus de sortie et à deux bus d'entrée reliés respectivement à une mémoire adressable (32) de valeurs de fonctions sinus et cosinus associée et au bus de sortie (SII) dudit deuxième étage,

– et pour le quatrième étage, dit de sortie du module, une troisième unité arithmétique d'addition/soustraction (40) à deux bus d'entrée et un bus de sortie SIV auquel est connecté ledit bus de bouclage (S'A, S'B) pour le chargement sélectif desdits premier et deuxième registres, un troisième et un quatrième registre de mémoire adressable (43A, 43B), chacun associé à l'un des bus d'entrée de ladite troisième unité arithmétique d'addition/soustraction et chargé sélectivement à partir du bus de sortie du troisième étage, et des circuits multiplexeurs (42A, 42B) assurant sélectivement l'alimentation de chaque bus d'entrée de ladite troisième unité arithmétique d'addition/soustraction à partir du bus de sortie (SIII) du troisième étage ou du registre associé.

2. Processeur selon la revendication 1, appliqué au calcul de la transformée en deux dimensions de blocs de N × N éléments d'image numériques d'un signal d'image, caractérisé par le fait qu'il comporte, en outre, un jeu de trois mémoires (50, 60, 70), dites première, deuxième et troisième mémoires, commandées individuellement en écriture et en lecture par ladite mémoire programmée (80) et associées audit module (1), et, pour chaque mémoire, un multiplexeur (52, 62, 72) de mots entrant et sortant de la mémoire et un multiplexeur (53, 63, 73) d'adressage de la mémoire, commandés par ladite mémoire programmée (80) pour relier séquentiellement ladite première mémoire, à double accès (50), mise en lecture puis la seconde mémoire (60), également à double accès, alors mise en lecture aux deux bus d'entrée (10A, 10B) du premier étage dudit module (1) tandis que ladite seconde mémoire (60) mise en écriture puis la troisième (70) mise en écriture sont reliées successivement, pour ces mêmes séquences, au bus de sortie (SIV) de l'étage de sortie du module (1) pour le transfert des mots résultant du module.

3. Processeur selon la revendication 2, caractérisé par le fait qu'il comporte, en outre, un circuit contrôleur principal (90), assurant le stockage des éléments d'image par blocs de $N \times N$ éléments d'image et des $N \times N$ coefficients issus de la transformation de chaque bloc, relié séquentiellement à ladite première mémoire (50) pour le chargement des blocs successifs d'éléments d'image dans cette mémoire et à ladite troisième mémoire (70) pour le déchargement des blocs de $N \times N$ mots résultants issus du module et constituant lesdits coefficients.

## Claims

1. A discrete cosine transform calculation processor for calculating the transform of a sequence of N digital data points where $N = 2^n$ and n is an integer greater than two, comprising arithmetic addition/subtraction and multiplication units, characterized in that it is organized in providing four successive calculation stages each assigned to a single operation and together constituting a processor module (1) controlled by a programmed store (80), wherein said stages comprise

– for the first stage, referred to as module input, a first arithmetic addition/subtraction unit (10) with two input buses receiving the data points to be processed in successive pairs and an output bus (SI) delivering the results,

– for the second stage, a second arithmetic addition/subtraction unit (20) with two input buses and an output bus (SII), first and second addressable storage registers (24A, 24B) each associated with a respective one of the input buses of said second arithmetic addition/subtraction unit, and multiplexer circuits (22A, 23A, 22B, 23B) selectively loading said first and second registers from the output bus (SI) of the first stage or from an internal bus, referred to as loopback bus (S'A, S'B) of the module and feeding each input bus of said second arithmetic addition/subtraction unit from the output bus of the first stage or the associated register;

– for the third stage, a multiplication unit (30) having an output bus and two input buses respectively connected to an associated adressable store (32) holding sine and cosine function values and to the output bus (SII) of said second stage;

– and for the fourth stage, referred to as module output, a third arithmetic addition/subtraction unit (40) having two input buses and an output bus (SIV) to which said loopback bus (S'A, S'B) is connected to load selectively said first and second registers, third and fourth addressable storage registers (43A, 43B) each associated with one of said input buses of said third arithmetic addition/subtraction unit and loaded selectively from the output bus of the third stage, and multiplexer circuits (42A, 42B) selectively feeding each input bus of said third arithmetic addition/subtraction unit from the output bus (SIII) of the third stage or the associated register.

2. A processor according to claim 1, for calculating the two-dimensional transform of blocks of $N \times N$ digital picture elements of a picture signal, characterized in that it further comprises a set of three stores (50, 60, 70), first, second and third stores, individually controlled in read and write modes by said programmed store (80) and associated with said module, and comprising, for each store, an incoming and outgoing word multiplexer (52, 62, 72) and a respective store addressing multiplexer (53, 63, 73), both controlled by said programmed store (80) to connect sequentially said first store (50), which has two access ports, in read mode and then the second store (60), which also has two access ports (10A, 10B) in read mode to both input buses of the first stage of said module (1), whereas said second store (60) in write mode and then the third store in write mode, are connected successively for the same sequences, to the output bus (SIV) of the output stage of the module (1) to transfer the module result words.

3. A processor according to claim 2, characterized in that it further comprises a controller circuit (90) for storing the picture element in blocks of $N \times N$ coefficients resulting from the transform of each block, which is serially connected to said first store (50) for loading successive picture element blocks in this store, and to said third store (70) for unloading blocks of $N \times N$ word resulting from the module and constituting said coefficients.

## Patentansprüche

1. Prozessor für die Berechnung der diskreten Cosinus-Transformierte, d.h. zur Berechnung der Transformierten einer Folge von N digitalen Daten, wobei $N = 2^n$ und n eine ganze Zahl grösser als 2 ist, mit arithmetischen Einheiten zur Addition/Subtraktion und zur Multiplikation, dadurch gekennzeichnet, dass er in vier aufeinanderfolgenden Rechenstufen organisiert ist, welche individuell mit ein und derselben Operation befasst sind und zusammen einen Prozessormodul bilden, der von einem programmierten Speicher (80) gesteuert wird, und dass die Rechenstufen:

– in der ersten Stufe, Moduleingang genannt, eine erste arithmetische Additions-/Subtraktionseinheit (10) mit zwei Eingangsschienen, welche paarweise und nacheinander die zu verarbeitenden Daten empfangen, und einer Ausgangsschiene (SI), welche die Ergebnisse liefert,

– in der zweiten Stufe eine zweite arithmetische Additions-/Subtraktionseinheit (20) mit zwei Eingangsschienen und einer Ausgangsschiene (SII), ein erstes und zweites adressierbares Speicherregister (24A, 24B), die je mit einer der Eingangsschienen der zweiten arithmetischen Additions-/Subtraktionseinheit in Verbindung stehen, und Multiplexerkreise (22A, 23A, 22B, 23B), welche selektiv das Laden des ersten und des zweiten Registers aus der Ausgangsschiene (SI) der ersten Stufe oder einer inneren Modulschiene, Schleifenschiene (S'A, S'B) genannt, besorgen sowie das Speisen jeder Eingangsschiene der zweiten arithmetischen Additions-/Subtraktionseinheit aus der Ausgangsschiene der ersten Stufe oder dem zugehörigen Register,

– in der dritten Stufe eine arithmetische Multiplikationseinheit (30) mit einer Ausgangsschiene und zwei Eingangsschienen, welche an einen zugehörigen adressierbaren Speicher (32) für die Sinus- und Cosinusfunktionswerte bzw. an die Ausgangsschiene (SII) der zweiten Stufe angeschlossen sind,

– und in der vierten Stufe, Modulausgang genannt, eine dritte arithmetische Additions-/Subtraktionseinheit (40) mit zwei Eingangsschienen und einer Ausgangsschiene (SIV), an welche die Schleifenschiene (S'A, S'B) zum selektiven Laden des ersten und des zweiten Registers, ein drittes und viertes adressierbares Speicherregister (43A, 43B), die je mit einer der Eingangsschienen der dritten arithmetischen Additions-/Subtraktionseinheit in Verbindung steht und selektiv aus der Ausgangsschiene der dritten Stufe geladen wird, und Multiplexerkreise (42A, 42B) zur selektiven Speisung jeder Eingangsschiene der dritten arithmetischen Additions-/Subtraktionseinheit aus der Ausgangsschiene (SIII) der dritten Stufe oder des zugehörigen Registers aufweisen.

2. Prozessor nach Anspruch 1 zur Berechnung der zweidimensionalen Transformierten der Blöcke aus N × N digitalen Bildelementen eines Bildsignals, dadurch gekennzeichnet, dass er weiter einen Satz von drei Speichern (50, 60, 70), erster, zweiter und dritter Speicher genannt, die individuell durch den genannten programmierten Speicher (80) beim Schreiben und beim Lesen gesteuert werden und mit dem Modul (1) in Verbindung stehen, und je einen Multiplexer (52, 62, 72) für jeden Speicher für die eingehenden und die ausgehenden Wörter des Speichers und je einen Adressiermultiplexer (53, 63, 73) für jeden Speicher aufweist, wobei die Multiplexer durch den programmierten Speicher (80) so gesteuert werden, dass nacheinander der erste Speicher, mit doppeltem Zugang (50), im Lesemodus geschaltet, und dann der zweite Speicher (60), ebenfalls mit doppeltem Zugang, dann im Lesemodus geschaltet, an die beiden Eingangsschienen (10A, 10B) der ersten Stufe des Moduls (1) angeschlossen werden, wogegen der zweite Speicher (60), im Schreibmodus geschaltet, und dann der dritte Speicher (70), im Schreibmodus geschaltet, nacheinander für die gleichen Sequenzen an die Ausgangsschiene (SIV) der Ausgangsstufe des Moduls (1) zur Überführung der resultierenden Wörter aus dem Modul angeschlossen werden.

3. Prozessor nach Anspruch 2, dadurch gekennzeichnet, dass er weiter einen Hauptkontrollkreis (90) umfasst, der die Speicherung der Bildelemente in Blöcken zu N × N Bildelementen und der N × N Koeffizienten aus der Transformation jedes Blockes bewirkt und nacheinander an den ersten Speicher (50) zum Laden dieses Speichers mit den aufeinanderfolgenden Blöcken der Bildelemente, und an den dritten Speicher (70) zum Entladen der aus dem Modul kommenden Blöcke mit N × N resultierenden Wörtern, die die genannten Koeffizienten bilden, angeschlossen ist.

# FIG.1

EP 0 154 341 B1

EP 0 154 341 B1

# FIG. 2

13

# FIG.3